# EUROPÄISCHE PATENTANMELDUNG

(11) **EP 2 983 264 A1**
(43) Veröffentlichungstag der Anmeldung: **10.02.2016**
(21) Anmeldenummer: 14179747.2
(22) Anmeldetag: 04.08.2014
(51) Int. Cl.: H02J 3/12, H02J 3/16, H02J 3/18

(54) **Steuereinheit für einen elektrischen Verbraucher, elektrische Verbraucher und Schaltungsanordnung mit einer elektrischen Steuereinheit und Verwendung der Steuereinheit**

(71) Anmelder: AEG Power Solutions GmbH, 59581 Warstein-Belecke (DE)
(72) Erfinder: Kempen, Stefan, 59821 Arnsberg (DE); Vogt, Thorsten, 59929 Brilon (DE)
(74) Vertreter: Graefe, Jörg

(57) **Zusammenfassung**

Die Erfindung betrifft ein Steuermittel (4a', 4b', 5) für wenigstens einen elektrischen Verbraucher (3a, 3b)
- mit einem Eingang zur Verbindung mit einem Wechselstromnetz (1),

wobei, dass das Steuermittel
- einen Sensor zur Erfassung der Netzfrequenz einer am Eingang zur Verbindung mit dem Wechselstromnetz (1) anliegenden Spannung und/oder
- einen Sensor zur Erfassung der Netzamplitude der am Eingang zur Verbindung mit dem Wechselstromnetz (1) anliegenden Spannung,
- eine Steuereinheit zur Ermittlung einer Information über eine zukünftige Wirkleistungsaufnahme und/oder eine zukünftige Blindleistungsaufnahme des wenigstens einen elektrischen Verbrauchers aufweist,
- wobei die Steuereinheit wenigstens eine Schnittstelle zur Bereitstellung der Information hat.

## Beschreibung

Die vorliegende Erfindung betrifft eine Steuereinheit für einen elektrischen Verbraucher, einen elektrischen Verbraucher mit einer elektrischen Steuereinheit und Schaltungsanordnungen mit elektrischen Verbrauchern.

Die Stabilisierung von Stromnetzen beruht derzeit in einem hohen Maße darauf, dass ein Großteil der verbrauchten elektrischen Energie zentral über rotierende Maschinen erzeugt wird. Die Trägheit der rotierenden Maschinen, d.h. die große Menge an in der rotierenden Maschine gespeicherter mechanischer Energie gleicht kurzfristige Schwankungen in dem Bedarf an elektrischer Energie aus. Ein Mehrbedarf an elektrischer Wirkleistung führt z.B. in den vorherrschenden, typischen Netzen mit ohmsch-induktiven Lasten zu einer Verlangsamung der rotierenden Maschine, ein plötzlich weniger werdender Bedarf an elektrischer Wirkleistung führt zu einer Beschleunigung der rotierenden Maschinen.

Die sich ändernde Drehzahl der rotierenden Maschinen macht sich dann in einer sich ändernden Netzfrequenz bemerkbar. Die Netzfrequenz steht also mit kurzfristigen Leistungsschwankungen in einem Zusammenhang. Ein ähnlicher Zusammenhang kann zwischen der Spannungsamplitude der Spannung und der Blindleistung beobachtet werden.

Ein mittelfristiger Minder- oder Mehrbedarf elektrischer Leistung wird dagegen durch Verminderung bzw. Erhöhung der mechanischen Leistung ausgeglichen, mit denen die Generatoren angetrieben werden.

Der Ausgleich des kurzfristigen Minder- oder Mehrbedarfs wird in der Zukunft durch die vermehrte Ankopplung von nicht rotierenden Generatoren (z. B. Fotovoltaikanlagen) und/oder die Ankopplung von Generatoren über leistungselektronische Schaltungen erschwert. Je weniger rotierende Maschinen elektrische Energie bereitstellen, um so weniger können diese netzstabilisierend wirken.

Hinzu kommt, dass bei der bisher verbreiteten überwiegend zentralen Stromerzeugung eine Koordinierung zwischen wenigen großen Kraftwerken zur Herstellung der Netzstabilität einfacher möglich ist als es in der Zukunft zwischen vielen dezentralen kleinen Kraftwerken der Fall sein wird.

Bisher werden Verbraucher nur in sehr rudimentärer Form zur Stabilisierung von Netzen herangezogen. Bekannt sind beispielsweise Verbraucher (z.B. Wärmepumpen), die in Spitzenzeiten ausgeschaltet werden. Ein weiteres Beispiel sind mit so genanntem Nachtstrom betriebene Verbraucher. Diese Art der Stabilisierung wirkt aber nur über einen langen Zeitraum.

Hier setzt die vorliegende Erfindung an.

Der vorliegenden Erfindung liegt die Aufgabe zugrunde, Verbraucher so zu gestalten, dass Verbraucher mehr zur Netzstabilität beitragen.

Diese Aufgabe wird dadurch gelöst, dass ein Steuermittel vorgeschlagen wird, das
- einen Sensor zur Erfassung der Netzfrequenz einer am Eingang zur Verbindung mit dem Wechselstromnetz anliegenden Spannung und/oder
- einen Sensor zur Erfassung der Netzamplitude der am Eingang zur Verbindung mit dem Wechselstromnetz anliegenden Spannung aufweist und
- eine Steuereinheit zur Ermittlung einer Information über eine zukünftige Wirkleistungsaufnahme und/oder eine zukünftige Blindleistungsaufnahme des wenigstens einen elektrischen Verbrauchers aufweist,
- wobei die Steuereinheit wenigstens eine Schnittstelle zur Bereitstellung der Information aufweist.

In den vorherrschenden Netzen mit (ohmsch-)induktiven Eigenschaften, aber auch in Netzen mit (ohmsch-)kapazitiven Eigenschaften, nicht aber in Netzen mit ohmschen Eigenschaften oder nahezu ohmschen Eigenschaften, besteht der oben erwähnte Zusammenhang zwischen der sich ändernden Wirkleistung und der sich ändernden Netzfrequenz. Die Netzfrequenz oder eine Änderung der Netzfrequenz kann also als Maß für den Mehrbedarf oder Minderbedarf an Wirkleistung in einem Netz betrachtet werden. Ebenso kann in diesen Netzen die Amplitude der Netzspannung oder die Änderung dieser Größen als Maß für den Mehrbedarf oder Minderbedarf an Blindleistung betrachtet werden. Bei einem erfindungemäßen Steuermittel wird diese Information dazu genutzt, eine Information, zum Beispiel eine Steuer- oder Regelanweisung oder eine Führungsgröße zu erzeugen, welche die Wirk- oder Blindleistungsaufnahme des wenigstens einen Verbrauchers betrifft, insbesondere die Wirk- oder Blindleistungsaufnahme des Verbrauchers steuert oder regelt.

Die erfindungsgemäß modifizierten Steuermittel können netzstabilisierend wirken, ohne dass sie von einer dritten Instanz (zum Beispiel einem Netzbetreiber) Anweisungen bekommen. Gemäß der Erfindung kann das Steuermittel bei Erfassung eines Anstiegs der Netzfrequenz durch die ermittelten Informationen vorgeben, dass eine Wirkleistungsaufnahme des wenigstens einen Verbrauchers erhöht wird und konstant bleibt.
Ebenso ist es möglich, dass das Steuermittel bei Erfassung eines Sinkens der Netzfrequenz durch die ermittelten Informationen vorgibt, dass die Wirkleistungsaufnahme des wenigstens einen Verbrauchers abgesenkt wird oder konstant bleibt.

Des weiteren ist es möglich, dass das Steuermittel bei Erfassung eines Anstiegs der Netzamplitude durch die ermittelten Informationen vorgibt, dass eine Blindleistungsaufnahme des wenigstens einen Verbrauchers erhöht wird oder konstant bleibt.

Das Steuermittel kann bei Erfassung eines Sinkens der Netzamplitude durch die ermittelten Informationen vorgeben, dass eine Blindleistungsaufnahme des wenigstens einen Verbrauchers abgesenkt wird oder konstant bleibt.

Die Idee ist es, das erfindungsgemäße Steuermittel so zu gestalten, dass es eine das Netz stabilisierende Wirkung entfaltet und dem veränderten Leistungsbedarf im gesamten Netz entgegengewirkt wird. Vereinfacht gesprochen soll dieses erfindungsgemäße Steuermittel kurzfristig reagieren um bei einem
- erhöhten Wirkleistungsbedarf im gesamten Netz den Wirkleistungsbedarf des wenigstens einen Verbrauchers zu reduzieren oder zumindest nicht zu erhöhen,
- reduziertem Wirkleistungsbedarf im gesamten Netz den Wirkleistungsbedarf des wenigstens einen Verbrauchers zu erhöhen oder zumindest nicht zu reduzieren,
- erhöhtem Blindleistungsbedarf im gesamten Netz den Blindleistungsbedarf des wenigstens einen Verbrauchers zu reduzieren oder zumindest nicht zu erhöhen und/oder
- reduziertem Blindleistungsbedarf im gesamten Netz den Blindleistungsbedarf des wenigstens einen Verbrauchers zu erhöhen oder zumindest nicht zu reduzieren.

Die Information kann eine Richt-Wirkleistungsaufnahme und/oder eine Richt-Blindleistungsaufnahme und/oder eine Richt-Änderung der Wirkleistungsaufnahme und/oder der Blindleistungsaufnahme und/oder ein Vorzeichen der Richt-Änderung der Wirkleistungsaufnahme und/oder der Blindleistungsaufnahme und/oder Ähnliches sein. Gemäß diesen Richt-Informationen können Verbraucher eingestellt werden. Dabei ist es nicht notwenig, dass die tatsächliche Wirkleistungsaufnahme und/oder die tatsächliche Blindleistungsaufnahme und/oder die tatsächliche Änderung der Wirkleistungsaufnahme und/oder die Blindleistungsaufnahme und/oder das Vorzeichen der tatsächlichen Änderung der Wirkleistungsaufnahme und/oder der Blindleistungsaufnahme für den wenigstens einen Verbraucher als einzustellende Soll-Information übernommen wird. Die tatsächliche Einstellung kann durchaus von den Richt-Informationen abweichen. Das kann insbesondere dann der Fall sein, wenn der Verbraucher von anderen Vorgaben nicht abweichen kann und zum Beispiel eine Mindest- oder Maximal-Wirkleistungsaufnahme nicht unter oder überschreiten darf oder die Änderung nicht beliebig groß oder klein werden darf. In dem elektrischen Verbraucher kann sogar vorgesehen sein, dass eine Einstellung zu einem beliebigen Zeitpunkt genau entgegen der Richt-Informationen erfolgt, falls es für einen ordnungsgemäßen Betrieb des Verbrauchers nötig ist.

Ebenso ist es möglich, dass die Information eine Soll-Wirkleistungsaufnahme und/oder eine Soll-Blindleistungsaufnahme und/oder eine Soll-Änderung der Wirkleistungsaufnahme und/oder der Blindleistungsaufnahme und/oder ein Vorzeichen der Soll-Änderung der Wirkleistungsaufnahme und/oder der Blindleistungsaufnahme und/oder Ähnliches ist. Dann müssen die von dem erfindungsgemäßen Steuermittel ermittelten Informationen eingehalten werden. Ein Abweichen ist dann nicht zulässig.

Ein erfindungsgemäßes Steuermittel kann einen Ausgang aufweisen.

Zwischen dem Eingang zur Verbindung mit dem Wechselstromnetz und dem Ausgang kann ein erfindungsgemäßes Steuermittel wenigstens eine Einheit zum Einstellen der Wirkleistungsaufnahme und/oder der Blindleistungsaufnahme aufweisen, die mit der Schnittstelle zur Bereitstellung der Information verbunden ist. Mit einem solchen Steuermittel ist dann nicht nur die Ermittlung der Information zur Einstellung des elektrischen Verbrauchers möglich. Über die wenigstens eine Einheit zum Einstellen der Wirkleistungsaufnahme und/oder der Blindleistungsaufnahme kann auch unmittelbar Einfluss auf die elektrischen Größen an einem Eingang des wenigstens einen Verbrauchers genommen werden. Das ist insbesondere dann sinnvoll, wenn der Verbraucher nicht geeignet und eingerichtet ist, seine Wirkleistungsaufnahme und/oder Blindleistungsaufnahme einzustellen oder in Abhängigkeit der Netzfrequenz und/oder der Netzamplitude einzustellen, um damit einer erhöhten oder verringerten Aufnahme durch alle Verbraucher entgegen zu wirken.

Bei der wenigstens einen Einheit zum Einstellen der Wirkleistungsaufnahme und/oder der Blindleistungsaufnahme kann es sich um einen Leistungssteller, einen Umrichter oder Ähnliches handeln.

Die Leistungssteller können eine Phasenanschnittsteuerung, eine Amplitudenregelung oder eine Pulspaketsteuerung zur Einstellung der Leistungsaufnahme aufweisen.

Die Umrichter können Voll- oder Halbbrückenschaltungen zum Beispiel mit MOS-FETs oder IGBTs sein. Bei einem für die Erfindung geeignetem Umrichter kann es sich auch um einen Resonanzkonverter handeln. Der Umrichter kann insbesondere eine Ausführung mit bis zu drei Umrichterstufen aufweisen, nämlich einer Gleichrichterstufe, einem Gleichspannungszwischenkreis und einem Wechselrichter.

Erfindungsgemäß ist ferner eine elektrische Schaltungsanordnung, die ein erfindungsgemäßes Steuermittel und wenigstens einen herkömmlichen elektrischen Verbraucher aufweist, wobei der wenigstens eine Verbraucher einen Eingang hat, der an den Ausgang des Steuermittels angeschlossen ist und das Steuermittel an seinem Ausgang eine Wirkleistung und/oder eine Blindleistung bereitstellt, die von der wenigstens einen Verbraucher aufgenommen wird.

Der Eingang des erfindungsgemäßen Steuermittels kann mit einem Anschluss eines öffentlichen Stromnetzes verbunden sein. Das Steuermittel kann dann zum Beispiel Teil einer Hausinstallation sein und die elektrischen Größen in der Hausinstallation so einstellen, dass die darin eingebundenen Verbraucher eine netzstabilisierende Wirkung entfalten, und entgegen dem allgemeinen Bedarf die Wirkleistungsaufnahme bzw. die Blindleistungsaufnahme verringern. Gemäß der Erfindung kann ein erfindungsgemäßer elektrischer Verbraucher sich dadurch von einem bisher bekannten Verbraucher unterscheiden, dass er ein erfindungsgemäßes Steuermittel aufweist, welches die Wirkleistungsaufnahme und/oder die Blindleistungsaufnahme des Verbrauchers steuert. Das erfindungsgemäße Steuermittel ist somit integraler Bestandteil des erfindungsgemäßen elektrischen Verbrauchers. Ein erfindungsgemäßer Verbraucher ist gegenüber einem bekannten Verbraucher so modifiziert, dass er seiner Wirk- und/oder Blindleistungsaufnahme entgegen der Leistungsaufnahme aller übrigen Verbraucher entgegenwirkt. Der erfindungsgemäße Verbraucher wirkt damit einer Destabilisierung des Netzes entgegen. Der erfindungsgemäß modifizierte Verbraucher wirkt dann netzstabilisierend, ohne dass er von einer dritten Instanz (zum Beispiel einem Netzbetreiber) Anweisungen bekommen müsste.

Ferner ist eine elektrische Schaltungsanordnung erfindungsgemäß, die ein erfindungsgemäßes Steuermittel und wenigstens einen elektrischen Verbraucher aufweist, wobei der Eingang des Steuermittels mit einem Anschluss eines öffentlichen Stromnetzes verbunden ist. Der wenigstens eine elektrische Verbraucher kann eine Schnittstelle für ein Informationssignal aufweisen, dass mit der Schnittstelle zur Bereitstellung der Information des Steuermittels verbunden ist. Bei einer solchen elektrischen Schaltungsanordnung kann der wenigstens eine Verbraucher wenigstens eine Einheit zum Einstellen der Wirkleistungsaufnahme und/oder der Blindleistungsaufnahme aufweisen, die innerhalb des Verbrauchers mit der Schnittstelle für das Informationssignal verbunden ist. Die steuermittelseitigen und die verbraucherseitigen Schnittstellen können drahtgebundene oder drahtlose Schnittstellen sein, zwischen denen ein Kommunikationskanal aufgebaut werden kann.

Gemäß der Erfindung kann ein erfindungsgemäßes Steuermittel auf verschiedene Art und Weise verwendet werden, insbesondere in einem Verbraucher und in elektrischen Schaltungsanordnungen mit einem Verbraucher in einer elektrischen Anlage, die an ein öffentliches Stromnetz angeschlossen ist.

Die erfindungsgemäßen Steuermittel können auch Teile von Vorschaltgeräten oder Netzgeräten sein. Diese können einen Gleichspannungs- oder einen Wechselstromausgang haben, an denen der Verbraucher angeschlossen wird.

Die erfindungsgemäßen Verbraucher oder die Verbraucher in erfindungsgemäßen Schaltungsanordnungen mit erfindungsgemäßen Steuergeräten und Verbrauchern können zum Beispiel Leuchten oder Leuchtmittel, Antriebe, elektrische Heizungen, Kühlgeräte, Klimageräte, Backöfen, Herde, Wärmepumpen, Umwälzpumpen von Heizungsanlagen, Waschmaschinen, Wäschetrockner o. ä. sein Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine erste Topologie einer Hausinstallation mit erfindungsgemäßen Steuermitteln,
- Fig. 2: eine zweite Topologie einer Hausinstallation mit erfindungsgemäßen Steuermitteln,
- Fig. 3: eine dritte Topologie einer Hausinstallation mit erfindungsgemäßen Steuermitteln,
- Fig. 4: eine vierte Topologie einer Hausinstallation mit erfindungsgemäßen Steuermitteln,
- Fig. 5: Abhängigkeiten der Wirkleistungsbereitstellung durch das Versorgungsnetz von der Netzfrequenz,
- Fig. 6: Abhängigkeiten der Wirkleistungsaufnahme eines erfindungsgemäßen Verbrauchers von der Netzfrequenz,
- Fig. 7: Abhängigkeiten der Blindleistungsaufnahme eines erfindungsgemäßen Verbrauchers von der Netzamplitude,
- Fig. 8: ein Beispiel für einen steuerbaren Gleichrichter und
- Fig. 9: ein Beispiel für einen steuerbaren Wechselrichter.

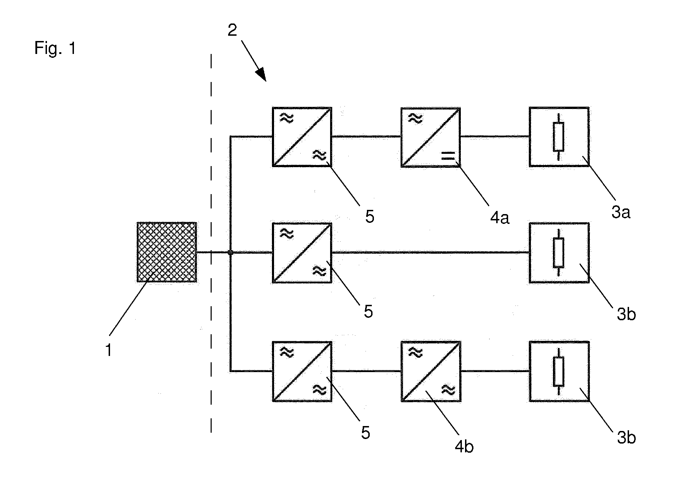

Die in den Figuren 1 bis 4 dargestellten Topologien zeigen in der linken Hälfte der Figuren jeweils das mit 1 bezeichnete Versorgungsnetz und in der rechten Hälfte der Figuren eine an das Versorgungsnetz angeschlossene Hausinstallation 2 einschließlich verschiedener Verbraucher 3a, 3b.

Bei der in der Figur 1 dargestellten Topologie der Hausinstallation sind erfindungsgemäße Vorschaltgeräte 5 vorgesehen, mit welchen die Leistungsaufnahme und/oder die Blindleistung zur Aufnahme der Verbraucher 3a, 3b, die über diese Vorschaltgeräte 5 mit dem Netz 1 verbunden sind, eingestellt werden kann. Bei den mit dem Bezugszeichen 3b bezeichneten Verbrauchern handelt es sich um Wechselstromverbraucher, bei dem mit dem Bezugszeichen 3a bezeichneten Verbraucher handelt es sich um einen Gleichstromverbraucher.

Der Gleichstromverbraucher 3a ist über einen Gleichrichter 4a herkömmlicher Bauart mit dem erfindungsgemäßen Vorschaltgerät verbunden.

Einer der beiden Wechselstromverbraucher 3b ist unmittelbar mit dem Vorschaltgerät 5 verbunden. Der andere Wechselstromverbraucher 3b ist dagegen über einen Umrichter 4b mit dem erfindungsgemäßen Vorschaltgerät 5 verbunden. Der Umrichter nimmt Anpassungen des Stroms und/oder der Spannung vor, wie es aus dem Stand der Technik bei einigen Wechselstromverbrauchern bekannt ist.

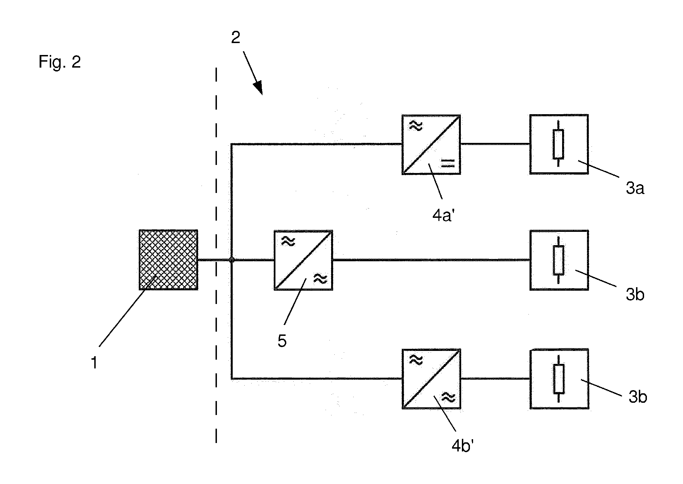

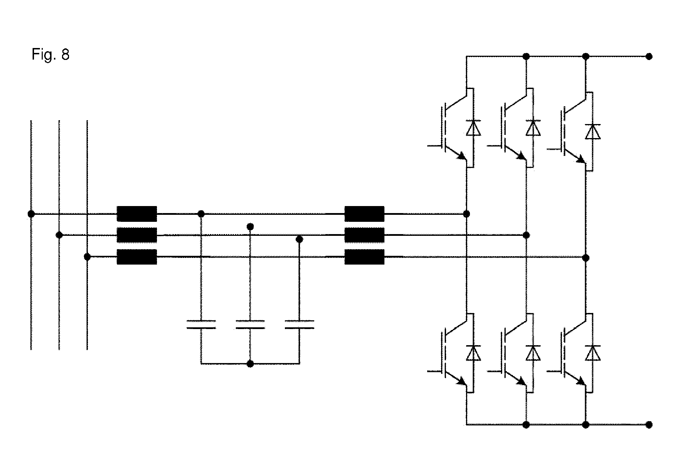

Bei der in Figur 2 dargestellten Topologie sind der Gleichrichter und das erfindungsgemäße Vorschaltgerät in einem Gerät 4a' vereinigt. Es liegt ein erfindungsgemäßer Gleichrichter 4a' vor, welcher es möglich macht, in Abhängigkeit der Netzfrequenz und/oder der Netzamplitude die während Leistungsaufnahme oder Blindleistungsaufnahme des Gleichstromverbrauchers 3b einzustellen. Der modifizierte erfindungsgemäße Gleichrichter 4a' kann wie in Figur 8 dargestellt ausgestaltet sein. Es handelt sich dabei um eine Drehstrom-Vollbrücke aus Leistungshalbleitern (IGBTs), die über ein Netzfilter aus Kondensatoren und Spulen an ein dreiphasiges Netz angeschlossen ist. An dem Ausgang eines solchen Gleichrichters kann ein Spannung erhaltender Kondensator vorgesehen sein, insbesondere wenn die Gleichstromlast über keine kapazitive Charakteristik verfügt.

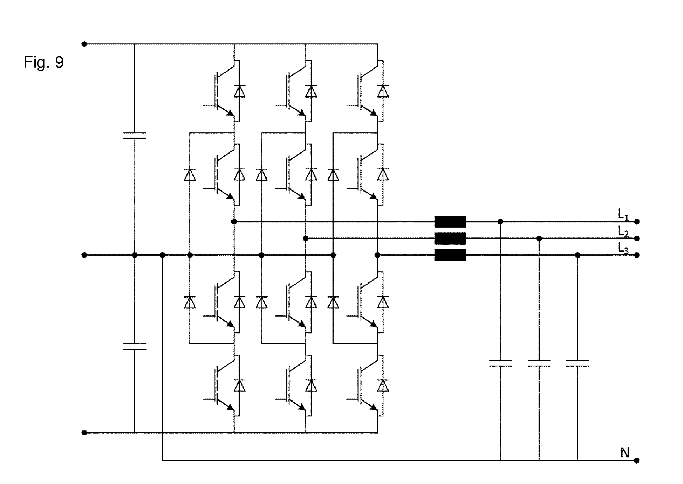

Ebenso wurden das erfindungsgemäße Vorschaltgerät und der Umrichter des unteren der beiden Wechselstromverbraucher 3b in einem Gerät 4b' vereinigt. Der so geschaffene erfindungsgemäße Umrichter 4b' ist in der Lage, in Abhängigkeit von der Netzfrequenz und/oder der Netzamplitude die Wirkleistungsaufnahme und/oder die Blindleistungsaufnahme des unteren Wechselstromverbrauchers 3b einzustellen. Der erfindungsgemäße Umrichter 4b' kann ein Umrichter mit drei Stufen sein, wobei eine Eingangsstufe durch einen Gleichrichter, eine zweite Stufe durch einen Gleichspannungszwischenkreis mit einem Kondensator und eine dritte Stufe durch einen Wechselrichter gebildet ist. Der Wechselrichter könnte beispielsweise so gestaltet sein, wie er in Figur 9 dargestellt ist. Dieser Wechselrichter hat eine so genannte drei-Level-Topologie, die zwar mit einem hohen Aufwand verbunden ist, aber eine sehr qualitativ hochwertige Ausgangsspannung liefern kann. Die Regelung eines solchen Wechselrichters kann durch eine reine Ausgangsspannung Regelungen realisiert werden. Beispielsweise eine Zustandregelung mit unterlagerter drei-Level-Pulsweitenmodulation möglich.

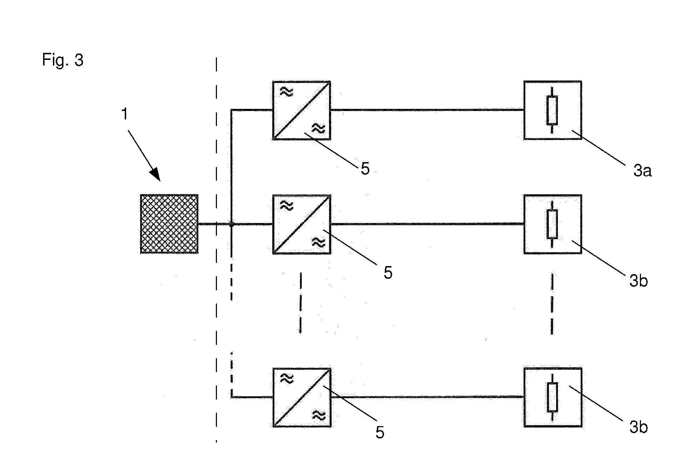

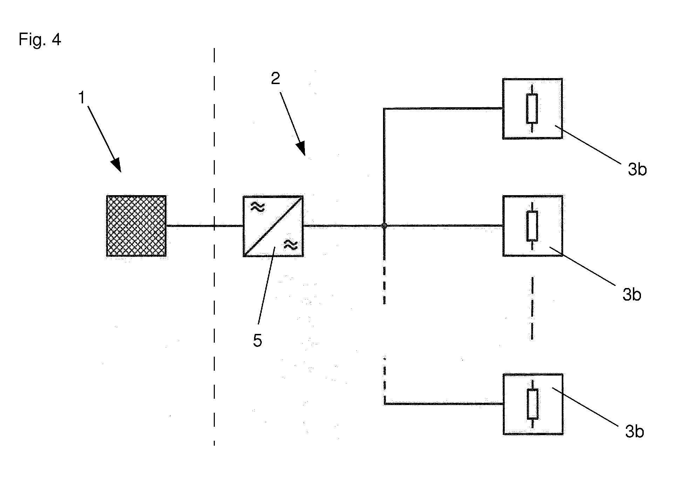

Bei der in Figur 3 dargestellten Topologie sind drei Wechselstromverbraucher 3b über jeweils ein erfindungsgemäßes Vorschaltgerät mit dem Netz verbunden. Alternativ zu dieser in Figur 3 dargestellten Topologie könnte auch die in Figur 4 dargestellte Topologie gewählt werden, bei der die drei Wechselstromverbraucher 3b mit einem erfindungsgemäßen Vorschaltgerät 5 verbunden sind, dass an das Netz 1 angeschlossen ist.

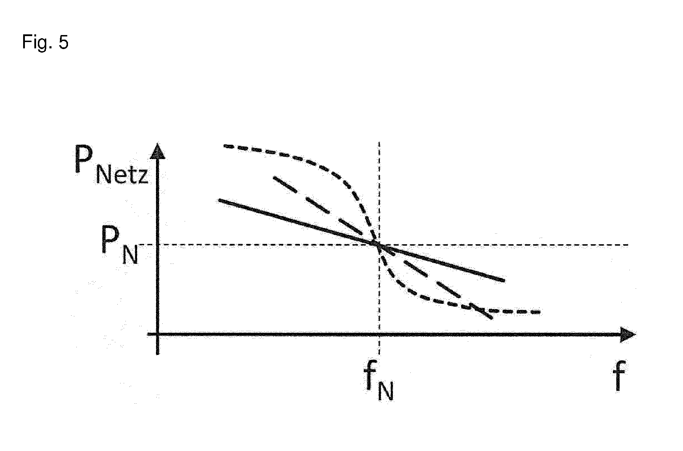

Das Verhalten eines Versorgungsnetzes und insbesondere der Zusammenhang zwischen der Werkleistungsbereitstellung und der Netzfrequenz ist in Figur 5 gut erkennbar. Durch die durchgezogenen, grob gestrichelten und die fein gestrichelten Linien, die allesamt monoton fallende Kurven sind, werden mögliche Verhaltensweisen eines herkömmlichen Versorgungsnetzes bei einer kurzfristigen Änderung des Leistungsbedarfs durch die an das Netz angeschlossenen Verbraucher dargestellt. Erkennbar ist der Effekt, dass bei einem Erhöhen der Wirkleistungsaufnahme der Verbraucher über die Nennwirkleistung P_{N}, auf welche die an das Netz angeschlossenen Stormerzeugern eingestellt sind hinaus, die Netzfrequenz f unter die Nennnetzfrequenz f_{N} absinkt und bei einem Absinken der Wirkleistungsaufnahme aller Verbraucher über die Nennwirkleistung P_{N}, auf die die Stromerzeuger eingestellt sind, die Netzfrequenz über die Nennnetzfrequenz f_{N} ansteigt.

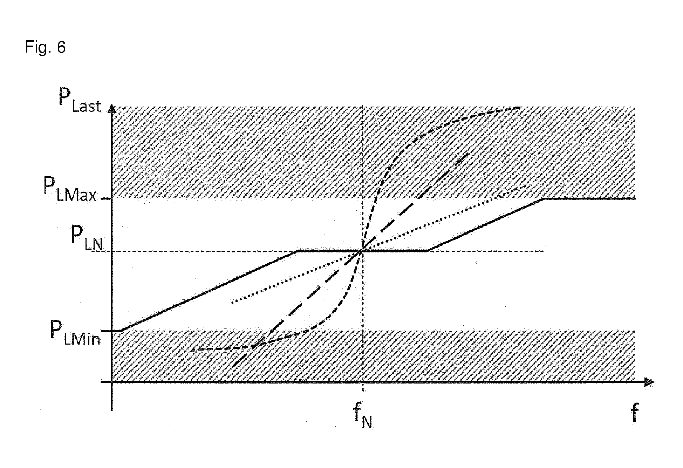

Das Verhalten eines erfindungsgemäßen Verbrauchers, Steuermittels, Gleichrichters, Wechselrichters, Vorschaltgerätes o.ä. ist in Fig. 6 gut erkennbar. Diese erfindungsgemäßen Geräte beobachten die Netzfrequenz und senken bei einem Absinken der Netzfrequenz ihre Wirkleistungsaufnahme ab, um so einem zunehmenden Wirkleistungsbedarf entgegen zu wirken. Umgekehrt erhöhen sie die Wirkleistungsaufnahme, sobald ein Anstieg der Netzfrequenz beobachtet wird. Durch die Geräte oder die ggf. an die Geräte angeschlossenen Lasten kann es zu einer Beschränkung des Absenkens oder Erhöhens der Wirkleistungsaufnahme kommen, so dass die Wirkleistungsaufnahme nicht unter einen Grenzwert P_{LMin} absinkt oder über einen Grenzwert P_{LMax} ansteigt.

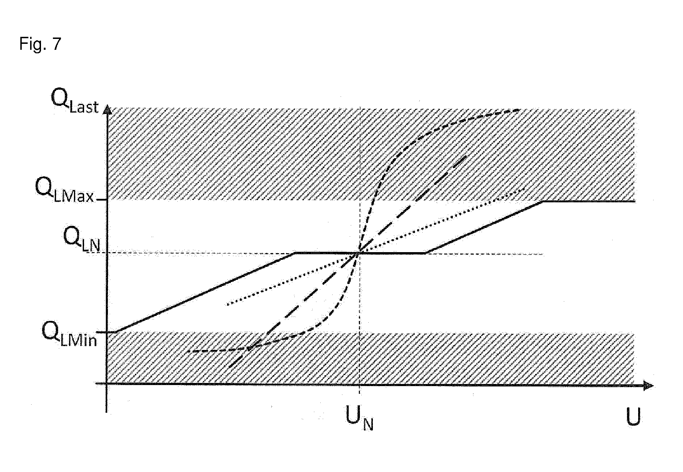

Ein ähnliches Verhalten können die erfindungsgemäßen Geräte (Verbraucher, Steuermittel, Gleichrichter, Wechselrichter, Vorschaltgerät o.ä.) bei einem Anstieg des Blindleistungsbedarfs haben (siehe Fig. 7). Bei einem Anstieg des Blindleistungsbedarfs über den Nennblindleistungsbedarf, auf den die Stromerzeuger eingestellt sind, hinaus, sinkt die Netzamplitude. Das wird von den erfindungsgemäßen Geräten beobachtet, was zu einem Absenken des Blindleistungsbedarfs durch die erfindungsgemäßen Geräte führt. Umgekehrt kann durch die erfindungsgemäßen Geräte mehr Blindleistung aufgenommen werden, sobald die Netzamplitude ansteigt, was ein Zeichen für einen Überschuss an Blindleistung ist. Auch in Bezug auf die Blindleistungsaufnahme können die erfindungsgemäßen Geräte Grenzen Q_{LMin} und Q_{Lmax} haben, die durch das Gerät oder einen ggf. daran angeschlossenen Verbraucher gegeben sind.

## Patentansprüche

1. Steuermittel (4a', 4b', 5) für wenigstens einen elektrischen Verbraucher (3a, 3b)
- mit einem Eingang zur Verbindung mit einem Wechselstromnetz (1),
**dadurch gekennzeichnet, dass** das Steuermittel
- einen Sensor zur Erfassung der Netzfrequenz einer am Eingang zur Verbindung mit dem Wechselstromnetz (1) anliegenden Spannung und/oder
- einen Sensor zur Erfassung der Netzamplitude der am Eingang zur Verbindung mit dem Wechselstromnetz (1) anliegenden Spannung,
- eine Steuereinheit zur Ermittlung einer Information über eine zukünftige Wirkleistungsaufnahme und/oder eine zukünftige Blindleistungsaufnahme des wenigstens einen elektrischen Verbrauchers aufweist,
- wobei die Steuereinheit wenigstens eine Schnittstelle zur Bereitstellung der Information hat.

2. Steuermittel (4a', 4b', 5) nach Anspruch 1, **dadurch gekennzeichnet, dass** die Steuereinheit bei Erfassung eines Anstiegs der Netzfrequenz durch die Ermittlung der Information eine Wirkleistungsaufnahme des wenigstens einen Verbrauchers (3a, 3b) erhöht und konstant vorgibt.

3. Steuermittel (4a', 4b', 5) nach Anspruch 1 oder 2, **dadurch gekennzeichnet, dass** die Steuereinheit bei Erfassung eines Sinkens der Netzfrequenz durch die Ermittlung der Information eine Wirkleistungsaufnahme des wenigstens einen Verbrauchers (3a, 3b) senkt oder konstant vorgibt.

4. Steuermittel (4a', 4b', 5) nach einem der Ansprüche 1 bis 3, **dadurch gekennzeichnet, dass** die Steuereinheit bei Erfassung eines Anstiegs der Netzamplitude durch die Ermittlung der Information eine Blindleistungsaufnahme des wenigstens einen Verbrauchers (3a, 3b) erhöht und konstant vorgibt.

5. Steuermittel (4a', 4b', 5) nach einem der Ansprüche 1 bis 4, **dadurch gekennzeichnet, dass** die Steuereinheit bei Erfassung eines Sinkens der Netzamplitude durch die Ermittlung der Information eine Blindleistungsaufnahme des wenigstens einen Verbrauchers senkt oder konstant vorgibt.

6. Steuermittel (4a', 4b', 5) nach einem der Ansprüche 1 bis 5, **dadurch gekennzeichnet, dass** die Information eine Richt-Wirkleistungsaufnahme und/oder eine Richt-Blindleistungsaufnahme und/oder eine Richt-Änderung der Wirkleistungsaufnahme und/oder der Blindleistungsaufnahme und/oder ein Vorzeichen der Richt-Änderung der Wirkleistungsaufnahme und/oder der Blindleistungsaufnahme und/oder Ähnliches ist.

7. Steuermittel (4a', 4b', 5) nach einem der Ansprüche 1 bis 6, **dadurch gekennzeichnet, dass** die Information eine Soll-Wirkleistungsaufnahme und/oder eine Soll-Blindleistungsaufnahme und/oder eine Soll-Änderung der Wirkleistungsaufnahme und/oder der Blindleistungsaufnahme und/oder ein Vorzeichen der Soll-Änderung der Wirkleistungsaufnahme und/oder der Blindleistungsaufnahme und/oder Ähnliches ist.

8. Steuermittel (4a', 4b', 5) nach einem der Ansprüche 1 bis 7, **dadurch gekennzeichnet, dass** das Steuermittel (4a', 4b', 5) einen Ausgang aufweist.

9. Steuermittel (4a', 4b', 5) nach Anspruch 8, **dadurch gekennzeichnet, dass** zwischen dem Eingang zur Verbindung mit dem Wechselstromnetz und dem Ausgang wenigstens eine Einheit zum Einstellen der Wirkleistungsaufnahme und/oder der Blindleistungsaufnahme aufweist, die mit der Schnittstelle zur Bereitstellung der Information verbunden ist.

10. Steuermittel (4a', 4b', 5) nach Anspruch 9, **dadurch gekennzeichnet, dass** die wenigstens eine Einheit zum Einstellen der Wirkleistungsaufnahme und/oder der Blindleistungsaufnahme ein Leistungssteller, ein Umrichter oder Ähnliches ist.

11. Elektrische Schaltungsanordnung (2), **dadurch gekennzeichnet, dass** sie ein Steuermittel (4a', 4b', 5) nach einem der Ansprüche 8 bis 10 und wenigstens einen elektrischen Verbraucher (3a, 3b) aufweist, wobei der wenigstens eine Verbraucher (3a, 3b) einen Eingang hat,der an den Ausgang des Steuermittels (4a', 4b', 5) angeschlossen ist und das Steuermittel (4a', 4b', 5) an seinem Ausgang eine Wirkleistung und/oder eine Blindleistung bereitstellt, die von dem wenigstens einen Verbraucher (3a, 3b) aufgenommen wird.

12. Elektrische Schaltungsanordnung (2) nach Anspruch 11, **dadurch gekennzeichnet, dass** der Eingang des Steuermittels (4a', 4b', 5) mit einem Anschluss eines Wechselstromnetzes (1) verbunden ist.

13. Elektrische Verbraucher, **dadurch gekennzeichnet, dass** der Verbraucher ein Steuermittel nach einem der Ansprüche 1 bis 10 aufweist, welches die Wirkleistungsaufnahme und/oder die Blindleistungsaufnahme des Verbrauchers steuert.

14. Elektrische Schaltungsanordnung, **dadurch gekennzeichnet, dass** sie ein Steuermittel nach einem der Ansprüche 1 bis 8 und wenigstens einem elektrischen Verbraucher aufweist, wobei der Eingang des Steuermittels mit einem Anschluss eines öffentlichen Stromnetzes verbunden ist und eine Schnittstelle für ein Informationssignal des wenigstens einen Verbrauchers mit der Schnittstelle zur Bereitstellung der Information des Steuermittels verbunden ist.

15. Elektrische Schaltungsanordnung nach Anspruch 14, **dadurch gekennzeichnet, dass** der wenigstens eine Verbraucher wenigstens eine Einheit zum Einstellen der Wirkleistungsaufnahme und/oder der Blindleistungsaufnahme aufweist, die mit der Schnittstelle für das Informationssignal verbunden ist.

16. Verwendung eines Steuermittels nach einem der Ansprüche 1 bis 10, in einer elektrischen Schaltungsanordnung nach Anspruch 11 oder 12, einem Verbraucher nach Anspruch 13 oder in einer elektrischen Schaltungsanordnung nach Anspruch 14 oder 15 in einer elektrischen Anlage, die an ein öffentliches Stromnetz angeschlossen ist.
